# EUROPEAN PATENT SPECIFICATION

(11) **EP 1 939 062 B1**
(45) Date of publication and mention of the grant of the patent: **09.03.2011**
(21) Application number: 06425866.8
(22) Date of filing: 28.12.2006
(51) Int. Cl.: B60W 50/08

(54) **A tactile/acoustic signaling arrangement for warning the driver of a vehicle, as well as a vehicle steering device and driving assistance system including such an arrangement**
Tast-/Tonsignalanordnung zum Warnen des Fahrers eines Fahrzeugs sowie eine Lenkvorrichtung für ein Fahrzeug und ein Fahrerassistenzsystem mit einer solchen Anordnung
Agencement de signalisation tactile/acoustique pour avertir le conducteur d'un véhicule, ainsi qu'un dispositif de contrôle de direction d'un véhicule et système d'assistance à la conduite selon cette agencement

(43) Date of publication of application: 02.07.2008
(73) Proprietor: Magneti Marelli S.p.A., 20011 Corbetta (MI) (IT)
(72) Inventor: Ghisio, Guido, 10078 Venaria Reale (Torino) (IT)
(74) Representative: Deambrogi, Edgardo

(56) References cited:
- EP-A- 0 856 432
- WO-A-03/042805
- DE-A1- 10 126 670
- FR-A- 2 838 595
- GB-A- 447 222
- US-A1- 2003 128 182
- US-A1- 2003 142 835

## Description

The present invention relates to vehicle driving assistance systems and, in particular, to systems for providing driving assistance in relation to the "lateral" movements performed by the vehicle, for assistance in keeping within a driving lane or in changing lanes and, more specifically, to a tactile/acoustic signalling arrangement as well as to a steering device and a driving assistance system including such an arrangement.

In recent years, the progress that has been achieved in the field of passive safety and the equipping of vehicles with active safety systems has contributed to a considerable improvement in road safety.

In order further to reduce dangerous situations and to achieve greater driving comfort, driving assistance systems are under development which can assist the driver in manoeuvres and in any critical driving situation that may arise on the road, preventing possible risky situations.

Lateral control of the vehicle is amongst the preventive safety functions that are governed by such systems; this involves the control of the vehicle with respect to any departure from the lane in which it is travelling or, if the driver wishes to "depart" from that lane, assistance in that operation by checking for any vehicles arriving in the destination lane.

Such systems are arranged to inform the driver of the need to adjust his path of movement with the use of various information channels such as visual indications, acoustic signalling, and tactile or "haptic" signalling.

For example, in a system for keeping the vehicle in the driving lane (known as "Lane Departure Warning"), it is arranged that the crossing or imminent crossing of the lines demarcating the driving lane will be signalled if the crossing is not intentional, that is, if the change of lane has not been indicated beforehand by operation of the appropriate direction indicator; the signalling is performed by acoustic means or by providing the driver with a tactile sensation (haptic feedback) in terms of vibration in the steering wheel or in terms of torque in the steering wheel which produces a sensation of resistance to crossing of the lane-demarcation lines and "suggests" the appropriate steering action to be undertaken in order to return the vehicle to the lane or to keep it within the lane.

In a system for supporting the lane-changing manoeuvre, for example, for assistance during overtaking, sensors are provided for scanning the area beside and behind the vehicle ("Blind Spot Monitoring") in order to identify other vehicles arriving in the destination lane and to reduce the risk of collisions. In this case, the signalling is typically entrusted to visual interfaces such as LEDs positioned on the rear-view mirrors, and/or to acoustic signals, but haptic feedback to the steering wheel such as signalling by means of vibrations or the generation of a resisting torque which opposes the risky manoeuvre may also be considered, as in a Lane Departure Warning system.

With the spread of such driving assistance and other systems, a need has arisen to operate with specific warning signals which are effective, that is, which can indicate quickly and unambiguously a specific state (of the environment, of the vehicle, or of the driver), which are differentiated from the numerous conventional acoustic and visual signals in order to prevent driver confusion and disorientation due to the multiplicity of signals (which may even be simultaneous), and which are selective in order to supply information to the vehicle driver but not to the passengers.

Tactile signals represent the best comprise solution in this sense since they are naturally perceptible, do not require particular attention to visual elements in a specific direction and do not disturb the passengers who are present.

Signalling by means of vibrations can be supplied through parts of the vehicle with which the driver is in contact in the course of an incorrect or dangerous manoeuvre, for example, the accelerator pedal in speed control, or through parts with which the driver is (or should be) constantly in contact, for example, the seat or the steering wheel, for any other type of signalling.

In most cases, because of the uncomfortable and inconvenient sensation caused by vibration of the seat, together with the risk that it may barely be perceived or may be perceived as being due to road conditions and therefore ignored, it is preferable to implement the signalling by vibration of the steering wheel or of a similar steering device with which the vehicle is provided. The steering device is in fact a part of the vehicle with which the driver is constantly in contact for driving purposes, and which he grips with his hands which are the part of the human body that has the greatest tactile sensitivity.

There are various known methods of producing a vibration in the steering wheel; amongst these, the main methods involve the application of "circumferential" vibrations by the generation of torques applied to the steering column, of axial vibrations produced by the movement of a striker member acting along the steering column, of transverse vibrations produced by the movement of rotating eccentric masses fitted in the steering-wheel structure, or even of radial vibrations produced by pulsations generated by the pumping of fluids in its circular grip.

EP 0 958 965 describes a solution for the generation of localized vibration in which a pair of magnetic vibration actuators is incorporated in the circular grip or rim of the steering wheel in opposed gripping positions which are generally held by a driver when driving, particularly in steering wheels that carry, on diametrally opposed horizontal spokes, controls for operating on-board apparatus or instruments.

The vibration is caused by the selective excitation of two solenoids which set in motion corresponding striker members acting on respective resilient members incorporated in two diametrally opposed positions on the steering-wheel rim. In the application envisaged, the tactile signalling is used to supply feedback relating to the operation of the controls on the steering wheel and, in a selective mode of activation of the solenoids, it is possible to recognize different signals according to the portion of the steering wheel which is caused to vibrate.

Disadvantageously, as well as causing the vibration to spread throughout the structure, limiting the efficacy of the selectivity of the signalling, the integration of the vibrating members in the intimate structure of the steering wheel also makes it impossible to post-fit this signalling capability in vehicles that are already on the road except by replacing the entire steering wheel which is a laborious and expensive procedure particularly for those steering wheels which carry controls for some on-board devices.

Moreover, when an acoustic signal is also to be associated with a tactile signal, further acoustic warning devices must be combined with the devices described, consequently increasing the complexity and cost of the system.

EP 0 856 432 , considered as the closest prior art, discloses an inside indicating device for a vehicle comprising a pair of piezoelectric actuating elements located into a steering wheel and adapted to generate mechanical vibrations in the steering wheel plane, perceivable by touch and ear by the driver, so as to supply signals for driver-assist purposes or alert of vehicle operating conditions. The touch and audio signal supplied to the driver largely depends on how steering wheel is gripped and the combined touch-audio effect is regulated by the placement of the driver's hands on the steering wheel. Furthermore, as in EP 0 958 965, the integration of the vibrating members in the intimate structure of the steering wheel makes it impossible to post-fit this device in a vehicle after production except by replacing the entire steering wheel.

The object of the present invention is to provide a tactile/acoustic signalling arrangement for warning the driver of a vehicle within a driving assistance system, which can be associated with a vehicle steering device and which enables effective and selective tactile and/or acoustic signalling indicative of anomalous driving conditions to be transmitted to the vehicle driver.

A further object of the invention is to provide a signalling arrangement which is easy to install in a vehicle not only during production but also as an after-market accessory for vehicles that are already on the road, without the replacement of parts, and which offers the driver an easily perceptible, logical and natural communication interface.

According to the present invention, these objects are achieved by means of a signalling arrangement having the characteristics specified in Claim 1.

Further subjects of the invention are a vehicle steering device and a vehicle driving assistance system including such an arrangement, as claimed.

Specific embodiments of the invention form the subjects of the dependent claims.

In summary, the present invention is based on the principle of the association of a pair of buzzers with a steering device, typically a steering wheel, which buzzers may be fitted on the steering-wheel structure externally or may be incorporated in its covering in positions in which it is gripped by the driver.

Each buzzer can operate selectively at sonic and infrasonic frequencies. A control circuit for the excitation of the buzzer enables different vibration modes to be achieved in order to convey to the driver information with variable content relating to current driving conditions, within a driving assistance system for the lateral control of the vehicle.

Further characteristics and advantages of the invention will be explained in further detail in the following specific description which is given by way of non-limiting example with reference to the appended drawings, in which:
Figures 1a and 1b are front and rear schematic views, respectively, of a steering wheel equipped with the signalling arrangement of the invention, and
Figure 2 is a cross-section exemplary view of the structure of the signalling arrangement of the invention.

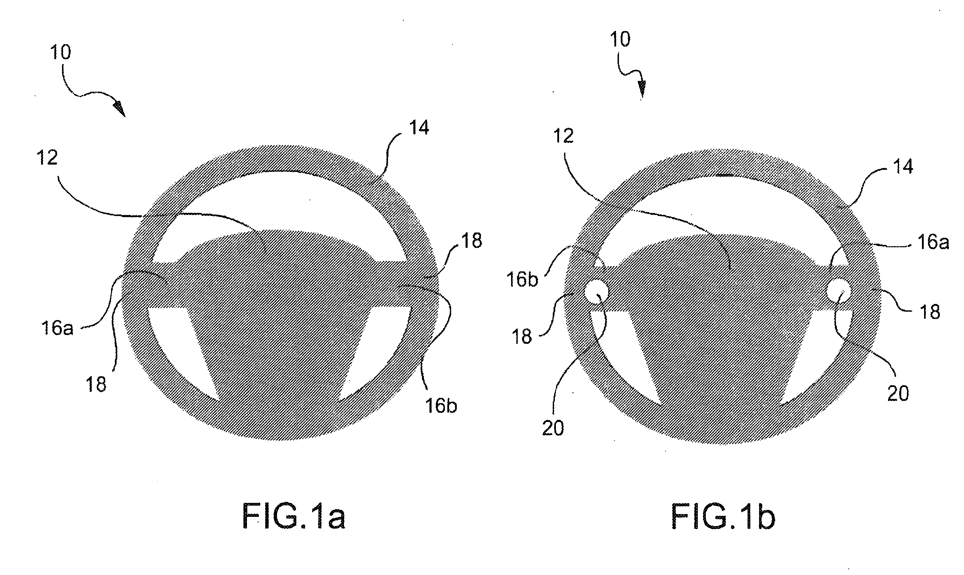

Figures 1a and 1b show a vehicle steering wheel 10 comprising a central hub 12 and a circular gripping rim 14 joined to the hub by connecting spokes including at least a pair of diametrally-opposed horizontal spokes indicated 16a and 16b.

The spokes 16a and 16b may incorporate controls for on-board devices and, in accordance with ergonomic principles, their arrangement is substantially horizontal to permit easy operation of the controls by the driver without the need to release his grip on the steering wheel which - in the most frequent driving conditions and in accordance with correct driving recommendations - is such that the hands are aligned horizontally in diametrally opposed positions so as to grip the rim portions indicated 18 in the drawings.

A signalling arrangement of the invention includes a pair of acoustic/tactile signalling devices which are individually indicated 20 and are fitted on the rear of the spokes 16a, 16b proximate to the rim 14 so that they are within the reach of the driver's fingers in the position in which the steering wheel is frequently (correctly) gripped, that is, in the gripping position which is generally maintained by a driver when driving, particularly with steering wheels that carry, on the horizontal spokes, controls for operating on-board apparatus and instruments.

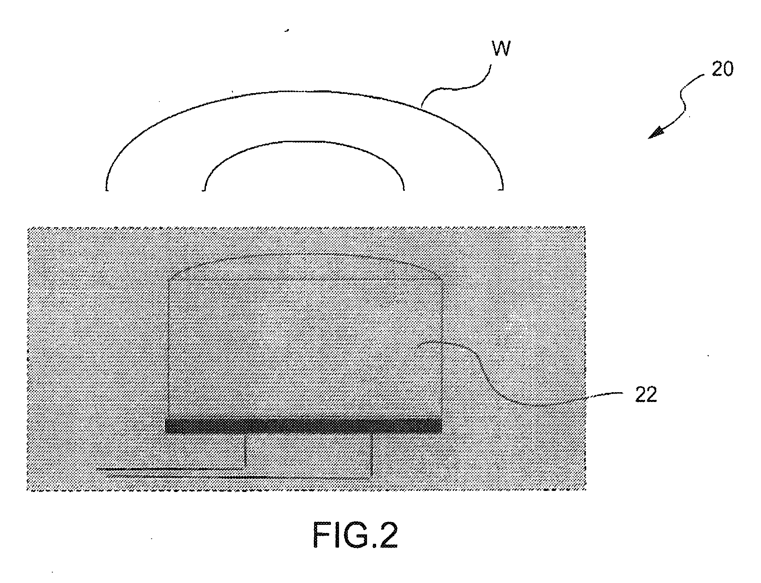

The structure of each signalling device 20 is shown in greater detail in Figure 2 and is described below.

Each signalling device 20 comprises a buzzer 22 to be fixed firmly to a spoke of the steering wheel, for example, to be incorporated in the plastics steering-wheel covering.

The buzzer may be constructed in accordance with a known technique and, for example, if it is piezoelectric, may comprise a piezo-electric element to which a vibrating plate is glued so that, when an alternating voltage is applied to the piezo-electric element, it expands and contracts producing vibrations of the plate and the consequent emission of sound.

In a magnetic embodiment, it is the fluctuation of a magnetic field that causes the movement of a membrane fixed to a core vibrating inside a solenoid. In both cases, the membranes face the exterior of the steering wheel in a position such that they are within the reach of the driver's fingers, as described above.

These buzzers are advantageously available in a wide range of frequencies including non-audible, infrasonic frequencies (< 20 Hz) and sonic (audible) frequencies (>20 Hz and < 20 kHz), preferably below 100 Hz and above 1 kHz, respectively.

The signalling devices 20 are adapted to adopt a rest state, indicative of a correct or safe driving condition, in which the buzzer 22 is inactive, a first signalling state, for example, indicative of a danger warning, in which the buzzer 22 is activated at infrasonic frequencies so that it can provide the driver with a tactile signal, and a second signalling state, for example, indicative of an incorrect driving manoeuvre, in which the buzzer 22 is activated at sonic frequencies so that it is adapted to provide the driver with an acoustic signal.

In practice, the signalling devices of the invention combine to provide a mixed type of feedback including a "haptic" feedback in the steering wheel which represents the most intuitive driver/vehicle interface device for constantly providing information to the driver regarding the environment surrounding the vehicle and for signalling anomalous driving conditions to prevent incorrect or dangerous manoeuvres, and an "acoustic" type of feedback which attracts the driver's attention more effectively in more critical situations, for example, if his initial reaction is inadequate.

In a driving assistance system, for example, a system for assistance in keeping within a driving lane or changing lanes, an on-board processing and control unit is arranged to recognize a vehicle driving scenario, in accordance with known techniques which do not form a subject of the present invention and are therefore not discussed in greater depth herein, and to assess the current driving condition (the driving condition or an incorrect manoeuvre).

The management of the signalling strategies and of the electronic control of the signalling devices 20 resides in the processing and control unit or in any other on-board unit which has access to the control unit by means of a data network (for example, CAN).

The signalling devices receive their activation signals from the control unit by direct connection (dedicated wiring) or via radio.

As a result of the recognition of an anomalous or potentially risky driving condition, the on-board processing and control unit is arranged to activate the signalling devices 20, by controlling their excitation circuits.

In the preferred embodiment, the excitation signal of the buzzer 22 is a pulsed signal and brings about a vibration of its movable part, causing the emission of acoustic waves as indicated W in the drawing, "acoustic wave" meaning, in general terms, an elastic wave which is propagated in space irrespective of whether it reaches the human ear and hence of its perception as sound, so that the term also extends to phenomena relating to acoustic waves of non-audible frequency (for example, infrasonic frequencies).

The signalling modes of each buzzer 22 may differ in vibration frequency or amplitude. Advantageously, a higher vibration frequency in the sonic range may be associated with an anomalous driving condition which is assessed as more critical than pre-alarm conditions which are signalled by means of a lower-frequency vibration within the infrasonic range and are perceptible exclusively by touch.

Advantageously, in a first, tactile signalling mode, only one of the signalling devices 20 may be activated to provide the driver not only with the signalling indicating an anomalous driving condition but also with an indication of the side of the vehicle on which the danger exists, for example, of the side towards which the vehicle is deviating or of the side of the vehicle towards which the correction, for example, a steering manoeuvre, is required.

In a second, acoustic signalling mode, only one of the signalling devices 20 may be activated to provide the driver with a signalling indicating a critical anomalous driving condition.

Advantageously, with reference to the above-described directional signalling mode, in the acoustic signalling mode, the buzzer that is not used for providing the tactile signal may be activated so as to provide the two signalling modes alongside one another rather than alternatively.

Advantageously, the fitting of the devices on the rear of the steering wheel does not interfere with incorporated safety devices such as an air-bag or any controls for on-board devices.

Buzzers are preferable to loud-speakers as signalling devices 20 since they are simpler and less expensive because they do not have to be precise and faithful in the reproduction of a wide range of frequencies including voice frequencies.

Moreover, with the arrangement of the invention, purely the localized vibration of each single device is noticeable when the driver's hands are in contact therewith and there is no widespread vibration of the steering-wheel structure, which could erroneously be interpreted as being due to road conditions and might therefore be ignored.

The signalling arrangement of the invention is advantageously particularly suitable for tactile and acoustic feedback applications in alerting/danger warning systems within the sphere of lateral vehicle control since its location on the steering wheel is suited to the position of a driver's hands in "cruising" attitude but, during complex, low-speed manoeuvres, is remote from the hand positions so that the irritating perception of possible false alarms is reduced.

The system is advantageously arranged to implement a Lane Departure Warning (LDW) type of control strategy, that is, to warn the driver of an anomalous or potentially risky driving condition when it recognizes a deviation of the vehicle relative to the demarcation lines of the road lane along which the vehicle is travelling and no activation of the direction indicators is detected so that the system interprets any departure from the lane travelled as unintentional.

It may also be arranged to implement a Lane Change Support (LCS) control strategy, that is, to assist the driver in a lane-changing manoeuvre, for example, in order to overtake, and to warn him of an anomalous or potentially risky driving condition. This occurs when no deviation of the vehicle relative to the demarcation lines of the lane along which it is travelling is recognized, in order to assist the driver in the decision to perform an overtaking manoeuvre or, in the event of a deviation of the vehicle which is signalled by means of the direction indicators and is therefore intentional, to assist the driver in initiating the overtaking manoeuvre.

Naturally, the principle of the invention remaining the same, the forms of embodiment and the details of construction may be varied widely with respect to those described and illustrated purely by way of non-limiting example, without thereby departing from the scope of protection of the present invention defined by the appended claims.

## Claims

1. A signalling arrangement for communicating anomalous driving conditions to the driver of a vehicle, adapted to be associated with a steering device (10) of the vehicle comprising at least a pair of gripping portions (18) for the driver's hands, and including at least a pair of signalling devices (20) adapted to be connected firmly to the steering device (10) proximate to a gripping portion (18) thereof, **characterised in that**
each signalling device (20) comprises a buzzer (22) which is adapted to selectively adopt a first signalling state, in which it is activated at infrasonic frequencies so as to provide a tactile signal, and a second signalling state, in which it is activated at sonic frequencies so as to provide an acoustic signal which is capable of attracting the driver's attention more effectively in more critical situations than in the first signalling state, as a function of a current driving condition.

2. An arrangement according to Claim 1, in which each signalling device (20) comprises an electrical excitation circuit for the respective buzzer device (22), the circuit being arranged to receive driving signals from means for assessing anomalous driving conditions of the vehicle and to generate an excitation signal for the buzzer device (22).

3. An arrangement according to Claim 2, in which the excitation circuit is arranged to generate an excitation signal comprising a train of pulses of at least one infrasonic frequency, according to the driving condition assessed.

4. An arrangement according to Claim 2 or Claim 3, in which the excitation circuit is arranged to generate an excitation signal comprising a train of pulses of at least one sonic frequency, according to the driving condition assessed.

5. An arrangement according to any one of Claims 2 to 4, in which the excitation circuit is arranged to generate an excitation signal comprising a train of pulses of variable frequency.

6. An arrangement according to any one of Claims 2 to 4, in which the excitation circuit is arranged to generate an excitation signal comprising a train of pulses of variable amplitude.

7. An arrangement according to any one of Claims 2 to 6, in which each signalling device (20) comprises a respective excitation circuit which is arranged to receive driving commands independently of other signalling devices (20) so as to present to the driver an anomalous driving condition signal indicative of the side of the vehicle on which the condition is detected, or of the side to the vehicle towards which a correction is required.

8. An arrangement according to any one of Claims 2 to 6, in which the signalling devices (20) comprise respective synchronized excitation circuits which are arranged to generate, respectively, a first excitation signal at an infrasonic frequency for the excitation of the buzzer (22) of a first signalling device (20), and a second excitation signal at a sonic frequency for the excitation of the buzzer (22) of the second signalling device (20).

9. An arrangement according to any of the preceding claims, wherein the signalling devices (20) are adapted to be fitted externally on the rear of the spokes (16a, 16b) of the steering device (10) within the reach of the driver's fingers.

10. A vehicle steering device (10), including at least a pair of gripping portions (18) for the vehicle driver's hands, **characterized in that** it comprises a signalling arrangement according to Claims 1 to 9.

11. A steering device (10) according to Claim 10, comprising a gripping rim (14) joined to a central hub (12) by means of at least a pair of horizontal connecting spokes (16a, 16b) each carrying a respective device (20) of the signalling arrangement.

12. A vehicle driving assistance system in particular for assistance in keeping within a driving lane or in changing lanes, including:
- means for detecting the environment surrounding the vehicle,
- electronic processing and control means arranged to assess the current driving condition on the basis of information relating to the vehicle driving scenario acquired by the detecting means, and
- a signalling arrangement according to Claims 1 to 9, which is adapted to be controlled by the processing and control means in order to signal to the driver an anomalous driving condition for which a manoeuvre or the operation of a control system of the vehicle is required.

## Patentansprüche

1. Signalgebungsanordnung für die Übermittlung anomaler Fahrzustände an den Fahrer eines Fahrzeugs, die dazu ausgelegt ist, einem Lenkrad (10) des Fahrzeugs zugeordnet zu werden, und wenigstens ein Paar Greifabschnitte (18) für die Hände des Fahrers und wenigstens ein Paar Signalgebungsvorrichtungen (20), die dazu ausgelegt sind, in der Nähe eines Greifabschnitts (18) des Lenkrads (10) fest mit diesem verbunden zu werden,
**dadurch gekennzeichnet, dass**
jede Signalgebungsvorrichtung (20) einen Summer (22) umfasst, der dazu ausgelegt ist, wahlweise als Funktion eines momentanen Fahrzustands einen ersten Signalgebungszustand, in dem er bei Infraschallfrequenzen aktiviert wird, um ein taktiles Signal zu schaffen, und einen zweiten Signalgebungszustand, in dem er bei Schallfrequenzen aktiviert wird, um ein Schallsignal zu schaffen, das die Aufmerksamkeit des Fahrers in kritischeren Situationen als in dem ersten Signalgebungszustand wirksamer auf sich ziehen kann, einzunehmen.

2. Anordnung nach Anspruch 1, wobei jede Signalgebungsvorrichtung (20) eine elektrische Erregungsschaltung für die jeweilige Summervorrichtung (22) umfasst, wobei die Schaltung dazu ausgelegt ist, Ansteuerungssignale von Mitteln zum Bewerten anomaler Fahrzustände des Fahrzeugs zu empfangen und um ein Erregungssignal für die Summervorrichtung (22) zu erzeugen.

3. Anordnung nach Anspruch 2, wobei die Erregungsschaltung dazu ausgelegt ist, in Übereinstimmung mit dem bewerteten Fahrzustand ein Erregungssignal zu erzeugen, das einen Impulszug mit wenigstens einer Infraschallfrequenz enthält.

4. Anordnung nach Anspruch 2 oder nach Anspruch 3, wobei die Erregungsschaltung dazu ausgelegt ist, in Übereinstimmung mit dem bewerteten Fahrzustand ein Erregungssignal zu erzeugen, das einen Impulszug mit wenigstens einer Schallfrequenz enthält.

5. Anordnung nach einem der Ansprüche 2 bis 4, wobei die Erregungsschaltung dazu ausgelegt ist, ein Erregungssignal zu erzeugen, das einen Impulszug mit variabler Frequenz enthält.

6. Anordnung nach einem der Ansprüche 2 bis 4, wobei die Erregungsschaltung dazu ausgelegt ist, ein Erregungssignal zu erzeugen, das einen Impulszug mit variabler Amplitude enthält.

7. Anordnung nach einem der Ansprüche 2 bis 6, wobei jede Signalgebungsvorrichtung (20) eine jeweilige Erregungsschaltung umfasst, die dazu ausgelegt ist, Ansteuerungsbefehle unabhängig von anderen Signalgebungsvorrichtungen (20) zu empfangen, um so dem Fahrer ein Signal über einen anomalen Fahrzustand anzubieten, das die Seite des Fahrzeugs, auf der der Zustand detektiert wird, oder die Seite des Fahrzeugs, zu der hin eine Korrektur erforderlich ist, angibt.

8. Anordnung nach einem der Ansprüche 2 bis 6, wobei die Signalgebungsvorrichtungen (20) jeweils synchronisierte Erregungsschaltungen umfassen, die dazu ausgelegt sind, jeweils ein erstes Erregungssignal mit einer Infraschallfrequenz für die Erregung des Summers (22) einer ersten Signalgebungsvorrichtung (20) und ein zweites Erregungssignal mit einer Schallfrequenz für die Erregung des Summers (22) der zweiten Signalgebungsvorrichtung (20) zu erzeugen.

9. Anordnung nach einem der vorhergehenden Ansprüche, wobei die Signalgebungsvorrichtungen (20) dazu ausgelegt sind, außen an der Rückseite der Speichen (16a, 16b) der Lenkvorrichtung (10) innerhalb der Reichweite der Finger des Fahrers angebracht zu werden.

10. Fahrzeuglenkvorrichtung (10), die wenigstens ein Paar Greifabschnitte (18) für die Hände des Fahrers des Fahrzeugs aufweist, **dadurch gekennzeichnet, dass** sie eine Signalgebungsanordnung nach den Ansprüchen 1 bis 9 umfasst.

11. Lenkvorrichtung (10) nach Anspruch 10, die einen Greifkranz (14) umfasst, der mit einer Mittelnabe (14) wenigstens mittels eines Paars horizontaler Verbindungsspeichen (16a, 16b) verbunden ist, wovon jede eine entsprechende Vorrichtung (20) der Signalgebungsanordnung trägt.

12. Fahrassistenzsystem für Fahrzeuge, insbesondere für die Unterstützung bei der Beibehaltung einer Fahrspur oder bei einem Fahrspurwechsel, mit:
- Mitteln zum Detektieren der Umgebung um das Fahrzeug,
- elektronischen Verarbeitungs- und Steuermitteln, die dazu ausgelegt sind, den momentanen Fahrzustand auf der Grundlage von Informationen, die auf das Fahrzeugfahrszenario bezogen sind, die von den Detektionsmitteln erfasst werden, zu bewerten, und
- einer Signalgebungsanordnung nach den Ansprüchen 1 bis 9, die dazu ausgelegt ist, durch die Verarbeitungs- und Steuermittel gesteuert zu werden, um dem Fahrer einen anomalen Fahrzustand zu melden, für den ein Manöver oder der Betrieb eines Steuersystems des Fahrzeugs erforderlich ist.

## Revendications

1. Agencement de signalisation pour la communication de conditions de conduite anormales au conducteur d'un véhicule adapté pour être associé à un dispositif de guidage (10) du véhicule comprenant au moins une paire de portions de préhension (18) pour les mains du conducteur, et comprenant au moins une paire de dispositifs de signalisation (20) adaptés pour être reliés de manière ferme au dispositif de guidage (10) à proximité d'une portion de préhension (18) de celui-ci,
**caractérisé en ce que**
chaque dispositif de signalisation (20) comprend un vibreur (22) qui est adapté pour adopter sélectivement un premier état de signalisation, dans lequel il est activé à des fréquences infrasonores de manière à procurer un signal tactile, et un deuxième état de signalisation, dans lequel il est activé à des fréquences soniques de manière à procurer un signal acoustique qui est capable d'attirer l'attention du conducteur plus efficacement dans des situations plus critiques que dans le premier état de signalisation, en fonction d'une condition de conduite courante.

2. Agencement selon la revendication 1, dans lequel chaque dispositif de signalisation (20) comprend un circuit d'excitation électrique pour le dispositif vibreur respectif (22), le circuit étant agencé pour recevoir des signaux de conduite provenant de moyens pour la détermination de conditions de conduite anormales du véhicule et pour générer un signal d'excitation pour le dispositif vibreur (22).

3. Agencement selon la revendication 2, dans lequel le circuit d'excitation est agencé pour générer un signal d'excitation comprenant un train d'impulsions d'au moins une fréquence infrasonore, en fonction de la condition de conduite déterminée.

4. Agencement selon la revendication 2 ou la revendication 3, dans lequel le circuit d'excitation est agencé pour générer un signal d'excitation comprenant un train d'impulsions d'au moins une fréquence sonique, en fonction de la condition de conduite déterminée.

5. Agencement selon l'une quelconque des revendications 2 à 4, dans lequel le circuit d'excitation est agencé pour générer un signal d'excitation comprenant un train d'impulsions de fréquence variable.

6. Agencement selon l'une quelconque des revendications 2 à 4, dans lequel le circuit d'excitation est agencé pour générer un signal d'excitation comprenant un train d'impulsions d'amplitude variable.

7. Agencement selon l'une quelconque des revendications 2 à 6, dans lequel chaque dispositif de signalisation (20) comprend un circuit d'excitation respectif qui est agencé pour recevoir des commandes de conduite indépendamment d'autres dispositifs de signalisation (20) de manière à présenter au conducteur un signal de condition de conduite anormale indiquant le côté du véhicule sur lequel la condition est détectée, ou le côté du véhicule vers lequel une correction est nécessaire.

8. Agencement selon l'une quelconque des revendications 2 à 6, dans lequel les dispositifs de signalisation (20) comprennent des circuits d'excitation synchronisés respectifs qui sont agencés pour générer, respectivement, un premier signal d'excitation à une fréquence infrasonore pour l'excitation du vibreur (22) d'un premier dispositif de signalisation (20), et un deuxième signal d'excitation à une fréquence sonique pour l'excitation du vibreur (22) du deuxième dispositif de signalisation (20).

9. Agencement selon l'une quelconque des revendications précédentes, dans lequel les dispositifs de signalisation (20) sont adaptés pour être ajustés de manière externe à l'arrière des bras (16a, 16b) du dispositif de guidage (10) à portée des doigts du conducteur.

10. Dispositif de guidage d'un véhicule (10) comprenant au moins une paire de portions de préhension (18) pour les mains du conducteur du véhicule, **caractérisé en ce qu'**il comprend un agencement de signalisation selon les revendications 1 à 9.

11. Dispositif de guidage (10) selon la revendication 10, comprenant une couronne de préhension (14) reliée à un moyeu central (12) au moyen d'au moins une paire de bras de liaison horizontaux (16a, 16b) portant chacun un dispositif respectif (20) de l'agencement de signalisation.

12. Système d'assistance à la conduite des véhicules, en particulier pour l'assistance au maintient dans une voie de conduite ou au changement de voies, comprenant:
- des moyens pour la détection de l'environnement entourant le véhicule,
- des moyens de traitement et de commande électroniques agencés pour déterminer la condition de conduite actuelle sur la base de l'information concernant le scénario de conduite du véhicule acquis par le moyen de détection, et
- un agencement de signalisation selon les revendications 1 à 9, qui est adapté pour être piloté par les moyens de traitement et de commande afin de signaler au conducteur une condition de conduite anormale pour laquelle une manoeuvre ou la mise en fonctionnement d'un système de commande du véhicule est requise.
